# EUROPÄISCHE PATENTANMELDUNG

(11) **EP 1 137 206 A2**
(43) Veröffentlichungstag der Anmeldung: **26.09.2001**
(21) Anmeldenummer: 01440045.1
(22) Anmeldetag: 26.02.2001
(51) Int. Cl.: H04B 10/155

(54) **Breitbandige thermische Lichtquelle sowie optisches Ubertragungssystem unter seiner Verwendung**

(30) Priorität: 20.03.2000 DE 10013718; 20.06.2000 DE 10029336
(71) Anmelder: ALCATEL, 75008 Paris (FR)
(72) Erfinder: Pfeiffer, Thomas, Dr., 70569 Stuttgart (DE)
(74) Vertreter: Rausch, Gabriele, Dr.

(57) **Zusammenfassung**

Es wird eine breitbandige optische Lichtquelle 1 vorgeschlagen, die eine Laserdiode und einen mit ihr verbundenen Modulator sowie einen Emitter für verstärkte spontane Emission enthält. Der optische Eingang des Emitters für verstärkte spontane Emission ist dabei mit dem Ausgang der Laserdiode verbunden. Weiterhin wird ein optisches Übertragungssystem unter Verwendung einer breitbandigen optischen Lichtquelle vorgeschlagen.

Es wird eine breitbandige optische Lichtquelle 1 vorgeschlagen, die eine Laserdiode und einen mit ihr verbundenen Modulator sowie einen Emitter für verstärkte spontane Emission enthält. Der optische Eingang des Emitters für verstärkte spontane Emission ist dabei mit dem Ausgang der Laserdiode verbunden. Weiterhin wird die Verwendung der breitbandigen optischen Lichtquelle als logische Entscheidereinheit oder Demultiplexer vorgeschlagen.

## Beschreibung

### Background

Die Erfindung geht aus von einer breitbandigen thermischen Lichtquelle sowie einem optischen Übertragungssystem unter Verwendung einer breitbandigen optischen Lichtquelle sowie von der Verwendung der breitbandigen optischen Lichtquelle , speziell für das Demultiplexen von Signalen.

Die breitbandige optische Lichtquelle weist dabei eine Laserdiode und einem mit ihr verbundenen Modulator und mit einem Emitter für verstärkte spontane Emission (ASE) auf, wobei der optische Eingang des Emitters für verstärkte spontane Emission (ASE) mit dem Ausgang der Laserdiode verbunden ist und der Ausgang des Emitters für verstärkte spontane Emission (ASE) mit einer Übertragungsstecke in einer solchen Weise verbunden ist, dass nur die breitbandigen ASE-Signalanteile übertragbar sind.

Aus dem Stand der Technik sind breitbandige thermische Lichtquellen sowie Übertragungssysteme unter Verwendung solcher Lichtquellen bekannt. Beispielsweise wird in der DE 198 33 549.0 eine breitbandige thermische Lichtquelle und ein optisches Übertragungssystem beschrieben. Bei der breitbandigen thermischen Lichtquelle handelt es sich um eine Leuchtdiode. Das sehr breitbandige Spektrum der Leuchtdiode wird mit Hilfe optischer Filter kodiert. Die kodierten optischen Signale werden im Übertragungssystem übertragen und durch spezielle Filterung am Empfänger aus dem Strom der kodierten Signale selektiert. Das Problem bei der Verwendung von breitbandigen Leuchtdioden ist die Modulationsgeschwindigkeit, mit der das Datensignal dem optischen Signal aufgeprägt wird. Die Modulationsfrequenz liegt dabei deutlich unter 1 GHz. Die Anforderungen an ein optisches Übertragungssystem gehen allerdings zu wesentlich höheren Datenraten.

Es ist daher Aufgabe der Erfindung eine breitbandige optische Lichtquelle zu schaffen, die mit einer hohen Modulationsfrequenz moduliert werden kann und in optischen Übertragungssystemen mit einem CDM (Code Division Multiplex)-Verfahren einsetzbar ist.

### Description

Die erfindungsgemäße breitbandige optische Lichtquelle sowie deren Einsatz in einem optischen Übertragungssystem ermöglicht eine Datenmodulation für Datenraten über 1 GHz unter Verwendung des CDM-Verfahrens, das breitbandige optische Quellen voraussetzt. Dabei wird in vorteilhafter Weise die schnelle Modulation einer Laserdiode mit der Breitbandigkeit eines Emitters von verstärkter spontaner Emission (ASE=Amplified Spontanous Emission) zu einer neuen Lichtquelle kombiniert.

In einer vorteilhaften Ausführungsform wird als breitbandige Quelle für verstärkte spontane Emission ein optischer Halbleiterverstärker eingesetzt.

In einer weiteren vorteilhaften Ausbildung ist als Emitter für verstärkte spontane Emission eine Leuchtdiode vorgesehen.

Die erfindungsgemäße breitbandige optische Lichtquelle weist den Vorteil auf, dass ihr Ausgangssignal im Vergleich zum Signal des Modulators digital invertiert ist. Das optische Übertragungssystem unter Verwendung der erfindungsgemäßen breitbandigen optischen Lichtquelle verwendet das CDM-Verfahren für Übertragungsraten über 1 Gbit/s pro CDM-Kanal. Vorteilhafterweise werden im optischen Übertragungssystem die beiden Komponenten der breitbandigen optischen Lichtquelle räumlich geteilt und befinden sich in der Teilnehmerstation und einem Netzknoten des Übertragungssystems. Dabei macht man sich im System die schmalbandige Emission in einer erste Stufe zu Nutze. Durch die schmalbandige Übertragung über die erste Übertragungsstrecke des optischen Übertragungssystems, bei der unterschiedliche Längen zu den Teilnehmerstationen überwunden werden müssen, sind Dispersionsprobleme einfacher zu handhaben. In einer weiteren vorteilhaften Ausführungsform sind alle optischen Eingänge des Netzknotens mit einem einzigen Emitter für verstärkte spontane Emission verbunden. In einem solchen Übertragungssystem erfolgt im Netzknoten eine Umkodierung der bereits in den Teilnehmerstationen kodierten Signale oder in einer anderen Ausführungsform eine Umwandlung von TDM in CDM kodierte Signale.

Weiterhin dient diese Lichtquelle in der erfindungsgemäßen Schaltung als NOR-Gatter oder als Demultiplexer für optisch übertragenen Signale.

Ausführungsbeispiele der Erfindung sind in den Figuren dargestellt und in der nachfolgenden Beschreibung näher erläutert. Es zeigt:
- Fig. 1: das Prinzip einer breitbandigen optischen Lichtquelle
- Fig. 2: ein Beispiel für eine Teilnehmerstation mit Lichtquelle
- Fig. 3: ein beispielhaftes Übertragungssystem
- Fig. 4: Ausschnitt aus einem optischen Übertragungssystem mit Teilnehmerstation und Netzknoten sowie
- Fig. 5: ein weiteres Ausführungsbeispiel des optischen Übertragungssystems mit Ausschnitt Teilnehmerstation und Netzknoten.
- Fig. 6: ein Beispiel für ein Schaltung als NOR Gatter
- Fig. 7: ein Beispiel einer Schaltung für hohe Datenraten
- Fig. 8: ein Beispiel einer Schaltung mit direkter Modulation des Emitters

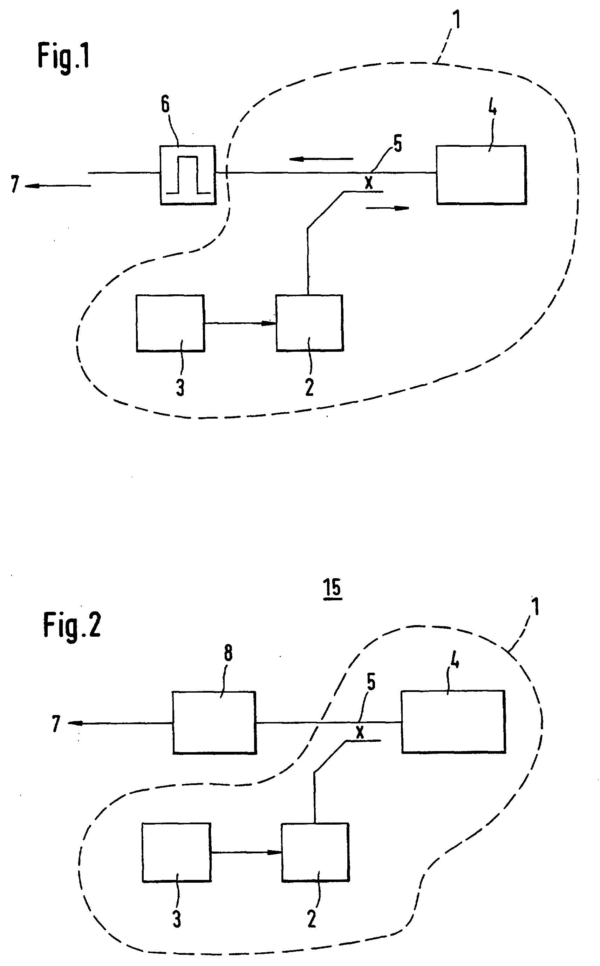

Fig. 1 zeigt eine breitbandige optische Lichtquelle 1, die aus folgenden Komponenten besteht: eine Laserdiode 2 ist eingangsseitig mit einem Modulator 3 verbunden. Der optische Ausgang der Laserdiode liegt an einem optischen Koppler 5 an. Der Ausgang des optischen Kopplers 5 ist mit dem Eingang eines Emitters 4 für verstärkte spontane Emission (ASE) verbunden. Der optische Ausgang des Emitters 4 für verstärkte spontane Emission (ASE), in der Zeichnung nicht getrennt vom optischen Eingang dargestellt, liegt am Eingang eines optischen Filters 6 an. Dieses optische Filter gehört nicht mehr zwingend zur breitbandigen optischen Lichtquelle 1 und ist daher außerhalb der Begrenzung dargestellt. Der Ausgang des optischen Filters 6 ist mit einer ersten Übertragungsstrecke 7 für die Übertragung der optischen Signale verbunden.

Die prinzipiellen Schwierigkeiten bei der Verwendung von bisher bekannten breitbandigen Lichtquellen ist, dass das Spektrum von Leuchtdioden nur geringe Anteile an stimulierter Emission aufweisen. Nur im Fall eines hohen Anteils an stimulierter Emission in der Emission einer Lichtquelle lassen sich schnelle Modulationsraten erreichen. Das begründet sich darauf, dass die Dichte der elektrischen Ladungsträger in der aktiven Zone des Bauelements schnell verringert wird, d.h. die Inversion schnell abgebaut wird. Betrachtet man als Bespiel für einen Emitter 4 einen Halbleiterverstärker, so emittiert der Verstärker bei Anlegen eines konstanten Stromes ein konstantes Signal besteht aus ASE. Die ASE entsteht durch spontanen Abbau des Inversionszustandes erzeugt durch den konstanten Strom. Das ASE-Signal enthält nur in sehr geringem Anteil kohärente Emission. Damit ist auch klar, dass auch ein Halbleiterverstärker der eine breitbandige ASE emittiert, nicht in ausreichender Geschwindigkeit moduliert werden kann. Speist man dagegen in den optischen Halbleiterverstärker ein kohärentes optisches Signal ein, kann sich die ASE genauso schnell abbauen wie im Fall einer stimulierten Emission in einem Laser. In dieser Weise lässt sich das ASE-Spektrum des Halbleiterverstärkers mit vergleichbarer Geschwindigkeit wie ein Halbleiterlaser modulieren. Der Halbleiterverstärker wird mit einem konstanten Betriebsstrom angeregt, so dass er eine konstante ASE emittiert. Diese Emission ist konstant solange kein optisches Signal am Halbleiterlaser anliegt. Die Laserdiode wird über den Modulator 3 mit der Datenrate elektrische moduliert. Wenn die Laserdiode eine "1" (Licht an) emittiert, wird die ASE des Halbleiterverstärkers minimiert. Emittiert die Laserdiode eine "0" (Licht aus) emittiert der Halbleiterverstärker ein Maximum an ASE. Die modulierte ASE wird dabei in Rückwärtsrichtung verwendet. In Vorwärtsrichtung wird das Signal unterdrückt, das wesentlich größere Anteile des Signals der Laserdiode enthält. In Rückwärtsrichtung sind nur noch kleine Anteile des Signals der Laserdiode im Spektrum der ASE des Halbleiterverstärkers enthalten. Diese Signalanteile, die aufgrund von Reflektionen oder Streuungen im ASE-Signal enthalten sind, werden in dieser Ausführungsform mit einem Filter 6 aus dem ASE-Spektrum gefiltert.

In einer weiteren Ausführungsform wird das ASE-Spektrum des Halbleiterverstärkers in Vorwärtsrichtung verwendet. In einer solchen Ausführungsform ist das optische Filter 6 zwingend notwendig, um das Licht der Laserdiode zu unterdrücken. Das modulierte ASE-Spektrum weist eine große Bandbreite auf. Die Modulationsgeschwindigkeit liegt dabei deutlich über 1 GHz, in einem Versuch war eine Modulationsfrequenz von 2,5 GBit/s möglich. Die Logik des modulierten ASE-Spektrums ist gegenüber dem elektrischen Modulationssignal am Modulator invertiert.

In einer anderen Ausführungsform wird der Halbleiterverstärker durch eine im Dauerstrichbetrieb operierende Leuchtdiode ersetzt. Auch in diesem Fall kann die spontane verstärkte Emission durch Abfrage des Inversionszustandes mit Hilfe des Lichts der Laserdiode abgerufen werden.

Fig. 2 zeigt eine weitere Ausführungsform der breitbandigen Lichtquelle 1. Zusätzlich zu der wie in Fig. 1 beschriebenen Lichtquelle enthält die gesamte Baugruppe, wie sie beispielsweise in einer Teilnehmerstation eines optischen Übertragungssystems zu finden ist, einen optischen Kodierer 8. Ein optischer Kodierer ist dabei im einfachsten Fall ein optisches Filter. Es kann sich dabei um ein Fabry-Perot-Filter oder Mach-Zehnder-Filter handeln. Das Filter ist nicht auf diese beiden Ausführungsformen beschränkt, jede andere Form von optischer Kodierung ist für das erfindungsgemäße Übertragungssystem geeignet.

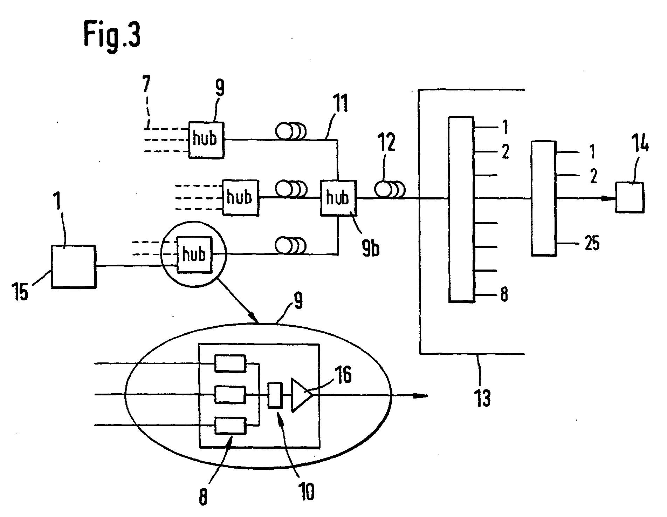

Fig. 3 zeigt beispielhaft ein komplettes optisches Übertragungssystem, in dem die erfindungsgemäße Lichtquelle eingesetzt werden kann.
Eine breitbandige Lichtquelle 1 in einer Teilnehmerstation 15 ist mit einem Netzknoten 9 verbunden. Die Lichtquelle hat eine Bandbreite, die die gesamte Bandbreite des Wellenlängenmultiplex ausfüllt. Der Netzknoten 9 weist mehrere Eingänge, sowie einen Ausgang auf. Eingänge wie Ausgänge sind mit optischen Übertragungsstrecken 7,11 verbunden. Eingangsseitig liegen die unterschiedlichen, breitbandigen Lichtquellen 1 der Netzteilnehmer 15 an. Die Ausgänge der Netzknoten 9 sind mit dem Eingang eines weiteren Netzknoten 9b verbunden. Der Ausgang desr Netzknoten 9b ist an eine weitere Übertragungsstrecke 12 angeschlossen. Diese Übertragungsstrecke 12 endet empfangsseitig an einem Verteiler 13. Der Verteiler 13 ist schematisch in zwei Stufen dargestellt. Er enthält eine spektrale Bandselektion sowie einen optischen Dekodierer. Die Ausgänge des optischen Dekodierers sind jeweils mit einem optischen Empfänger 14 verbunden.

Für den Netzknoten 9 ist ein Ausschnittsbild gezeigt. Die optischen Eingänge des Netzknoten 9 enden an optischen Kodierern 8. Die Ausgänge der optischen Kodierer 8 enden an einem spektralen Bandselektionsmittel 10. Der Ausgang des spektralen Bandselektionsmittels ist mit dem Eingang eines Verstärkers 16 verbunden. Der Ausgang des Verstärkers 16 liegt an der Übertragungsstrecke 11 an.

Die Sender 1 senden in einem breiten Wellenlängenbereich. Diese breitbandigen Signale werden anschließend optisch kodiert. Die optischen Signale durchlaufen dafür optische Filter. Diese Filter sind entweder in den Sendern direkt oder aber in den Netzknoten 9 angeordnet, in dem sie als optische Kodierer 8 dargestellt sind. Aus den breitbandigen, kodierten Signalen werden in den Netzknoten durch das Bandselektionsmittel 10 kodierte Signale aus den breitbandigen Signalen herausgeschnitten, die nur noch die Bandbreite eines WDM- Bandes überdecken.

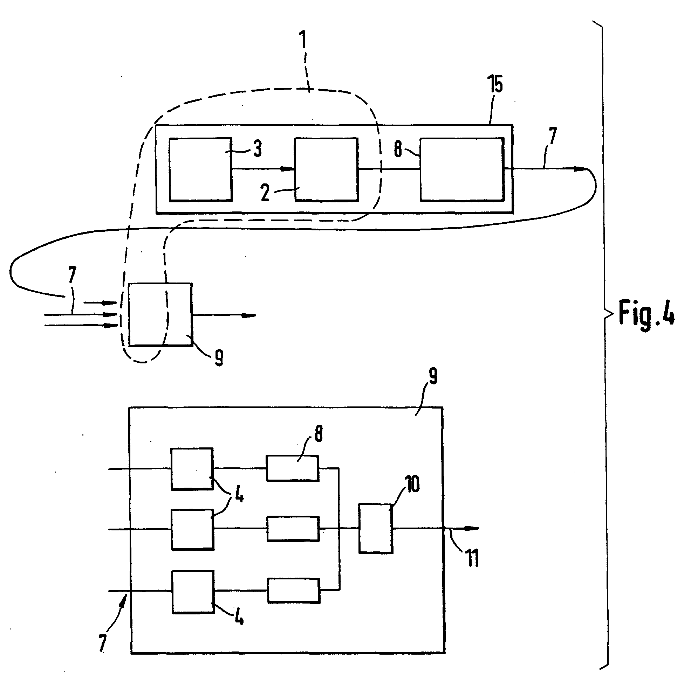

Fig. 4 stellt einen Ausschnitt aus dem optischen Übertragungssystem beschränkt auf Teilnehmerstation 15 und Netzknoten 9 dar. Innerhalb der Teilnehmerstation 15 befindet sich ein Teil der optischen Lichtquelle 1. Dieser Teil besteht aus der Laserdiode 2, die mit dem Modulator 3 verbunden ist. Der Ausgang der Laserdiode 2 liegt über einem optischen Kodierer 8 an der Übertragungsstrecke 7 an. Die Übertragungsstrecken 7 enden am Eingang eines Netzknoten 9. Der Detailausschnitt zeigt den Netzknoten 9. Die Übertragungsstrecken 7 sind mit Emittern 4 für verstärkte spontane Emission verbunden. Jeder Emitter 4 ist mit dem Eingang eines spektralen Kodierers 10 verbunden, dessen Ausgang am Eingang eines optischen Bandselektionsmittel 8 anliegt. Der Ausgang des spektralen Bandselektionsmittel ist mit der zweiten Übertragungsstrecke 11 verbunden. Man erkennt in diesem Ausführungsbeispiel, dass die breitbandige Lichtquelle 1 auf zwei unterschiedliche Orte verteilt ist. Der eine Teil der Lichtquelle - bestehend aus Laserdiode 2 - befindet sich in der Teilnehmerstation 15 der zweite maßgebliche Teil der Emitter für verstärkte spontane Emission innerhalb des Netzknoten des Übertragungssystems. Jedes ankommende in dieser Ausführungsform schmalbandige optische Signal ist am Netzknoten 9 jeweils mit einem Emitter 4 für ASE, beispielsweise einem Halbleiterverstärker, verbunden. Dadurch ist die Wandlung von schmalbandig zu breitbandigem Signal erst im Netzknoten vollständig. Eine solche Ausführungsform hat den Vorteil, dass die erste Übertragungsstrecke 7 schmalbandig überwunden wird, eine Übertragungsstrecke an der Teilnehmer in unterschiedlichen Entfernungen angebunden sind. Gerade deshalb sind Probleme mit Dispersionen durch unterschiedlich lange Übertragungsstrecken vorprogrammiert. Durch den Einsatz einer ersten Stufe mit schmalbandiger Übertragung werden diese Probleme verringert. Die Wandlung in ein breitbandiges Signal erfolgt dann erst am Netzknoten 9. Die weitere Verarbeitung des Signals und die Übermittlung an einen Empfänger läuft dabei über definierte Streckenlängen, so dass man Vorkehrungen zur Vermeidung von Störungen durch Dispersion treffen kann.

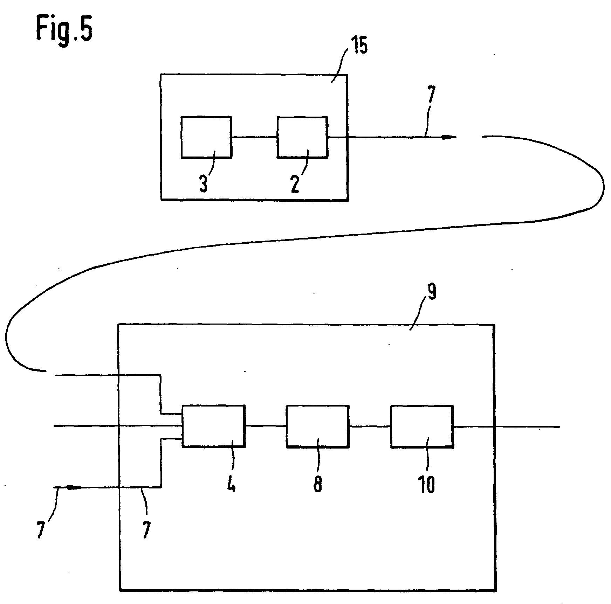

Fig. 5 zeigt eine weitere Ausführungsform mit einem Ausschnitt der Teilnehmerstation 15 und dem Netzknoten 9. Ein solches Übertragungssystem verwendet wieder in einer ersten Stufe eine schmalbandige Übertragung von der Teilnehmerstation 15 zum Netzknoten 9. Am Netzknoten 9 laufen die Übertragungsstrecken 7 in einem einzigen Emitter 4 für ASE zusammen. Die Übertragung erfolgt in dem ersten Stück 7 des Übertragungssystem dabei in einem Zeitmultiplexverfahren. Erst im Netzknoten 9 werden die Zeitmultiplexsignale in breitbandige Signale gewandelt und anschließend optisch kodiert über die Übertragungsstrecke 11 und 12 übertragen.

Ein weiteres Ausführungsbeispiel des optischen Übertragungssystems (nicht als Zeichnung dargestellt) verwendet eine breitbandige optische Quelle nach Fig. 2. In diesem Fall wird bereits in der Teilnehmerstation durch Einsatz des Kodierers ein kodiertes breitbandiges Signal erzeugt. Das kodierte breitbandige Signal wird über den ersten Teil der Übertragungsstrecke 7 an den Netzknoten 9 weitergegeben. Im Netzknoten 9 wandelt der empfangende Emitter 4 das breitbandige kodierte Spektrum in ein kontinuierliches strukturloses ASE-Spektrum um. Anschließend wird das Spektrum wiederum einem Kodierer 8 zugeführt. Durch einen solchen Systemaufbau ist eine Umkodierung eines kodierten Signales möglich. Damit kann eine rein optische Umsetzung oder ein Umschalten von einem optischen Kode auf einen anderen erfolgen. Die ursprünglichen Signale der elektrischen Modulation bleiben vollständig erhalten. Ein solcher Systemaufbau wird auch verwendet, um einen optisch kodierten Kanal von einem Wellenlängenband in ein anderes Band umzusetzen, wobei derselbe optische Kode verwendet wird. Die Umsetzung erfolgt in einem anderen Fall von einem optischen Band auf ein anderes optisches Band unter gleichzeitiger Umsetzung des optischen Kodes. Im gesamten optischen Übertragungssystem ist das Resultat der Verwendung der breitbandigen Lichtquelle 1 eine Invertierung des elektrischen Modulationssignals. In einem Fall, in dem ein Invertierung für das Übertragungssystem nicht erlaubt ist, steuert man den Treiber der Laserdiode mit invertierter Logik an. Eine weitere Möglichkeit besteht in einer Kaskadierung von zwei Emittern für ASE beispielsweise zwei Halbleiterverstärkern.

Die erfindungsgemäße breitbandige Lichtquelle wird in einer alternativen Ausführungsform nicht mit einem externen Modulator betrieben. Statt dessen wird die Laserdiode direkt mit einem modulierten Laserstrom angesteuert. Diese Betriebsform hat den Vorteil, dass verschiedene Modulationsschemata verwendet werden können. Eine Wandlung von NRZ zu RZ Signalen ist auf einfache Weise zu erreichen.

Eine Verwendung der erfindungsgemäßen breitbandigen Lichtquelle kann auch als Vorverstärker in einem Empfänger erfolgen. Vor der O/E-Wandlung wird das modulierte empfangene Licht in den Strahlengang der Laserdiode eingekopppelt. Das modulierte, übertragenen Signal wird zusammen mit dem Licht der Laserdiode in den Emitter für ASE eingekoppelt. Als Resultat erhält man ein breitbandiges verstärkes Signal, das anschließend O/E gewandelt werden kann.

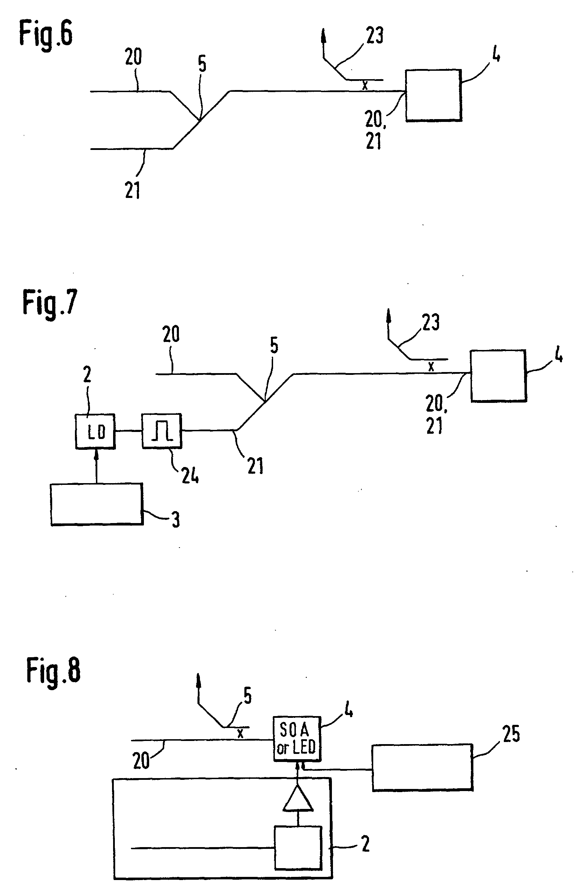

Fig. 6 zeigt eine Ausführungsform der breitbandigen Lichtquelle 1 in einer Schaltung als NOR Gatter. Der Signaleingang 20 ist dabei mit einer Laserdiode 2 mit Modulator 3 entweder direkt lokal oder auch über eine Übertragungsstrecke verbunden. Das Eingangssignal 20 liegt über einen Koppler 5 an dem Eingang des Emitter 4 an. Mit dem Koppler 5 ist zudem eine Quelle für ein Gate-Signal 21 verbunden. Ist das Gate-Signal 21 für den Emitter4 ist stark genug, um den Emitter in der Sättigung zu betreiben, wird keine ASE emittiert. Dieser Effekt wird ausgenützt, um den Emitter als logisches Gatter zu betreiben. Das Gate-Signal 21 führt bei Aussendung einer "1" zu einem Ausbleicheffekt der ASE. Nur wenn kein Gate-Signal 21 anliegt schaltet das Eingangssignal zwischen den Zuständen "1" und "0". Es wird ausgangsseitig ein logisches breitbandiges ASE Signal 23 emittiert. Dieses Signal folgt der unten stehenden logischen Tabelle.

Wird kein Gate-Signal angelegt, emittiert der Emitter 4 jeweils ein zum Eingangssignal 20 invertiertes ASE-Signal 23.

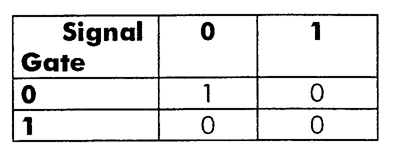

Figur 7 zeigt ein Ausführungsbeispiel für die Anwendung bei hohen Datenraten. Die Quelle für das Gate-Signal 21 ist wie im Fall der Signalquelle eine Laserdiode 2. Diese Laserdiodes2 ist mit einem externen Modulator 3 verbunden. Der Ausgang der Laserdiode 2 liegt an einem optischen Filter 24, beispielsweise einem Bragg-Filter an. Der Ausgang des optischen Filter 24 ist mit dem Koppler 5 und darüber mit dem Emitter 4 für ASE verbunden.

Für Signale hoher Datenraten müssen die Impulse des Gate-Signals 21 eine mit der Bitperiode des Signals vergleichbare Länge haben. Hohe Datenraten erfordern somit auch hohe Modulationsfrequenzen für die Laserdiode des Gate-Signals. Für den Betrieb der erfindungsgemäßen Schaltung ist es daher von Vorteil, die Geschwindigkeitsanforderungen für die Modulation der Laserdiode zu reduzieren. Dies ist durch die in Fig. 3 ausgeführte Schaltung im Falle von periodischen Signalen 20 möglich. Die Laserdiode für das Gate-Signal wird mit Strom mit kleinen Amplitude angesteuert. Die Ansteuerung erfolgt dabei mit einem sinusförmigen Verlauf. Mit dieser Ansteuerung wird auch die Frequenz der Laserdiode variiert. Wenn die Frequenz des Gate-Signals 21 im Maximum des optischen Filters liegt, wird diese Signal rückreflektiert. In diesem Moment ereicht kein Gate-Signal den Emitter für ASE 4, das Gate-Signal ist "0". Liegt die Frequenz der Laserdiode 2 neben dem Reflektionsmaximum des optischen Filter 24 wird das Signal durchgelassen. Es liegt ein Gate-Signal "1" vor. Da bei jeder Periode in der Ansteuerung der Laserdiode Maximum und Minimum zweimal durchlaufen werden, ist die Ansteuerungsfrequenz für den Laserstrom die Hälfte der Gate-Frequenz. . Die Länge des Gate-Signals ist über die Amplitude des Ansteuerstroms der Laserdiode festgelegt.

Die in Fig. 3 dargestellt Ausführung arbeitet beispielsweise als Demultiplexer für Zeitmultiplex-Signale als Eingangssignale 20.

Figur 4 zeigt eine weiter vorteilhafte Ausführungsform für einen Demultiplexer von Zeitmultiplex-Signalen. Dabei wird der Emitter für ASE 4 mit einem variablen Sättigungsstrom einer Stromquelle 25 betrieben. Dieser Strom stellt den den ersten Zweig der logisch zu entscheidenden Signale dar. Der zweite Zweig wird wie bereits beschrieben durch das optischen Eingangssignal 20 erzeugt.

Soll mit einer solchen Variante einen logische Entscheidung zwischen zwei optischen Signalen erzeugt werden, kann ein optisches Signal elektrisch gewandelt und zur Erzeugung des Sättigungsstroms herangezogen werden.

Die logische Tabelle dieser Ausführungsform ist wie folgt gegeben:

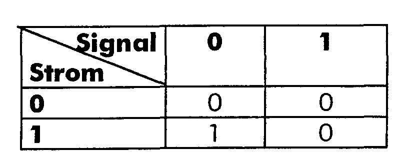

Das optische Ausgangssignal entspricht dem invertierten optischen Eingangssignal.

## Patentansprüche

1. Breitbandige optische Lichtquelle (1) mit einer Laserdiode (2) und einem mit ihr verbundenen Modulator (3) und mit einem Emitter (4) für verstärkte spontane Emission (ASE), wobei der optische Eingang des Emitters (4) für verstärkte spontane Emission (ASE) mit dem Ausgang der Laserdiode (2) verbunden ist und der Ausgang des Emitters (4) für verstärkte spontane Emission (ASE) mit einer Übertragungsstecke (7, 11, 12) in einer solchen Weise verbunden ist, dass nur die breitbandigen ASE-Signalanteile übertragbar sind.

2. Breitbandige optische Lichtquelle (1) nach Anspruch 1, **dadurch gekennzeichnet, dass** der Emitter (4) für verstärkte spontane Emission einen Leuchtdiode (40) oder ein optischer Halbleiterverstärker (41) ist.

3. Breitbandige optische Lichtquelle (1) nach Anspruch 1, **dadurch gekennzeichnet, dass** der Modulator (3) eine Modulationsfrequenz über 1 GHz ermöglicht.

4. Breitbandige optische Lichtquelle (1) nach Anspruch 1, **dadurch gekennzeichnet, dass** die verstärkte spontane Emission am optischen Ausgang des Emitters (4) für verstärkte spontane Emission (ASE) ein im Vergleich zur Laserdiode (2) invertiertes Signal aufweist.

5. Optisches Übertragungssystem unter Verwendung einer breitbandigen optischen Lichtquelle (1) nach Anspruch 1, das mit einem CDM (Code Division Multiplex)- Verfahren arbeitet, bestehend aus Teilnehmerstationen (15), optischen Kodierern (8), Netzknoten (9), spektralen Bandselektionsmitteln (10), Übertragungsstrecken (7,11,12), optischen Dekodierern (13) und optischen Empfängern (14).

6. Optisches Übertragungssystem nach Anspruch 5, **dadurch gekennzeichnet, dass** die Laserdiode (2) in einzelnen Teilnehmerstationen (15) und der Emitter (4) für die spontane stimulierte Emission (ASE) im Netzkoten (9) eingebaut ist.

7. Optisches Übertragungssystem nach Anspruch 5, **dadurch gekennzeichnet, dass** alle optischen Eingänge des Netzknotens (9) für die Übertragungsstrecken (7) mit einem Emitter (4) für spontane stimulierte Emission (ASE) verbunden sind und dass in einem Zeitmultiplex eingehenden optische Signale im Netzknoten nach dem Emitter (4) für spontane verstärkte Emission einen CDM Kodierer durchlaufen.

8. Optische Übertragungssystem nach Anspruch 5, **dadurch gekennzeichnet, dass** eine breitbandige Lichtquelle und der Kodierer (8) in einer Teilnehmerstation (15) und der Emitter (4) für spontane verstärkte Emission im Netzknoten (9) eingebaut sind, und dass im Netzknoten (9) ein Umkodierer (8) für die Signale vorhanden ist.

9. Breitbandige optische Lichtquelle nach Anspruch 1 wobei die Modulation der Laserdiode (2) durch einen direkte Modulation des Laserstroms erfolgt.

10. Verwendung einer breitbandigen optischen Lichtquelle nach Anspruch 1 oder 9 als Vorverstärker in einem Empfänger (14) eines Übertragungsystems.

11. Breitbandige optische Lichtquelle nach Anspruch 1, mit einen Signaleingang für ein optisches Signal und einem zum Signaleingang parallelen logischen Eingang.

12. Breitbandige optische Lichtquelle (1) nach Anspruch 11, **dadurch gekennzeichnet, dass** der Emitter (4) für verstärkte spontane Emission mit einem Signal des logischen Eingangs gesättigt ist.

13. Breitbandige optische Lichtquelle (1) nach Anspruch 11, **dadurch gekennzeichnet, dass** der logische Eingang ein optischer Eingang ist.

14. Breitbandige optische Lichtquelle (1) nach Anspruch 11, **dadurch gekennzeichnet, dass** der logische Eingang ein elektrischer Eingang ist.

15. Verwendung einer optischen Lichtquelle (1) nach Anspruch 11 als logische Entscheidereinheit zwischen zwei optischen Signalen.

16. Verwendung einer optischen Lichtquelle (1) nach Anspruch 11 als logische Entscheidereinheit zwischen einem optischen und einem elektrischen Signal.

17. Verwendung einer optischen Lichtquelle (1) nach Anspruch 11 als Demultiplexer für Zeitmultiplex-Signale.

18. Verfahren zum Demultiplexen von Zeitmultiplex-Signalen mit einer optischen Lichtquelle (1) nach Anspruch 11, **dadurch gekennzeichnet, dass** das logische Signal (21) innerhalb zweier Bitperioden in der Frequenz variiert wird, ein optisches Filter mit einem Reflexionsmaximum bei einer mittleren Frequenz durchläuft, das logische Signal bei einem Durchlauf der variablen Frequenz über das Reflexionsmaximum ein Minimum und zwei Maxima durchläuft und dann in den Emitter (4) eingespeist wird.
